# EUROPEAN PATENT SPECIFICATION

(11) **EP 1 448 114 B1**
(45) Date of publication and mention of the grant of the patent: **28.04.2010**
(21) Application number: 02803492.4
(22) Date of filing: 22.11.2002
(51) Int. Cl.: A61C 15/04

(54) **A DENTAL FLOSS DEVICE**
ZAHNSEIDENVORRICHTUNG
DISPOSITIF A FIL DENTAIRE

(30) Priority: 23.11.2001 US 332010 P
(43) Date of publication of application: 25.08.2004
(73) Proprietor: APC LIMITED, Castleknock, Dublin 15 (IE)
(72) Inventor: DOUGAN, Michael, Dublin 15 (IE); SULLIVAN, Paul, Dublin 15 (IE); KENNEDY, Conor, Blackrock, County Dublin (IE)
(74) Representative: O'Brien, John Augustine
(86) International application number: PCT/IE2002/000160
(87) International publication number: WO 2003/043523

(56) References cited:
- DE-U- 8 708 369
- US-A- 3 927 686
- US-A- 5 056 540
- US-A- 5 127 415
- US-A- 5 483 982

## Description

### Introduction

The invention relates to a dental floss device of the type comprising a disposable dental floss holder for interengagement with a head piece of a handle, an assembly.

More particularly, the invention relates to a dental floss device comprising a handle having a head piece and a dental floss holder for inter-engagement with the head piece, the dental floss holder comprising a base portion and a pair of spaced-apart jaws extending from the base portion to accommodate a length of dental floss therebetween. US-A-5,483,982 described a dental floss device of this type.

Devices of this type are described in US-A-3,892,249. One of the problems with this type of dental floss device is that there is a risk that a user may not correctly interengage the holder with the head piece of the handle. This leads to inefficient flossing as the floss position is not optimised. There is also a risk that the holder may move and/or become dislodged in use which leads to user discomfort.

There is therefore a need for an improved dental floss device which will address these issues.

### Statements of Invention

In the invention is defined in claims 1 and 10.

The interlock parts comprise a projection and a recess to receive the projection.

Most preferably the interlock parts are a push fit when the holder is in the correct alignment configuration.

In one embodiment the interlock parts comprise an interlock tongue and a corresponding interlock groove to receive the interlock tongue. The interlock tongue is slidably engagable in the interlock groove when the holder is correctly aligned with the head piece. Advantageously the interlock tongue is of arcuate shape in cross section and the interlock groove is of complementary arcuate shape.

The interlock comprises a head interlock part and a corresponding holder interlock part, the head interlock part being provided on one of the engagement tongue or engagement groove and the corresponding holder interlock part being provided on the other of the engagement tongue or engagement groove.

The interlock part extends laterally of the engagement tongue or engagement groove.

In one embodiment the dental floss holder comprises a releasable lock for engagement on assembly with the head piece. Preferably the releasable lock comprises snap fit projections.

Most preferably the snap fit projections are provided on the jaws of the holder.

In one embodiment the dental floss is a length of dental floss string.

In another embodiment the dental floss is a length of dental floss tape.

The invention also provides a handle for a dental floss device of the invention.

The invention further provides a dental floss holder for assembly to a head piece of a handle, the dental floss holder comprising a base portion and a pair of spaced-apart jaws extending from the base portion to accommodate a length of dental floss therebetween the holder comprising an engagement groove for engagement with a complementary tongue portion of a head piece; or an engagement tongue portion for engagement with a complementary engagement groove of a head piece, the jaws of the holder extending to embrace a head piece of a handle therebetween in a correct alignment configuration of the holder with respect to a handle, in use, the dental floss holder having a holder interlock on the engagement groove or engagement tongue, the interlock parts being adapted to substantially prevent interengagement of the engagement groove and the engagement tongue except when the holder is in a correct alignment configuration. The holder interlock comprises an interlock projection or an interlock recess for engagement, on assembly with a corresponding interlock tongue or interlock recess of a head piece only when the holder is in the correct alignment configuration. The interlock projection comprises an interlock tongue. The interlock recess comprises an interlock groove.

The interlock tongue or the interlock groove extends from the base portion of the holder

### Brief Description of the Drawings

The invention will be more clearly understood from the following description thereof given by way of example only with reference to the accompanying drawings, in which:-
Fig. 1 is a perspective view of an assembled dental floss device of the invention;
Fig. 2 is another perspective view of the device;
Figs. 3(a) and 3(b) are perspective views illustrating the assembly of a dental floss holder part and a handle head piece part of the device;
Fig. 4 is a perspective view of a dental floss holder according to the invention;
Fig. 5 is a top plan view of the holder of Fig. 4;
Fig. 6 is an end view of the holder of Fig. 4;
Fig. 7 is an end view of the holder mounted to a head piece;
Fig. 8 is a perspective view of another holder of the invention;
Figs. 9(a) and 9(b) are perspective views illustrating the assembly of a dental floss holder part and a handle head piece part of another dental floss device which does not fall within the scope of the claims.
Fig. 10 is a perspective view of a holder part of the device of Fig. 9;
Fig. 11 is top plan view of the holder of Fig. 10;
Fig. 12 is an end view of the holder of Fig. 10;
Fig. 13 is an end view of the holder of Fig. 10 mounted to a head piece;
Fig. 14 is a perspective view of a dental floss holder part and a handle head piece part of another dental floss device of the invention;
Fig. 15 is top plan view of the holder part of the device of Fig. 14;
Fig. 16 is an end view of the holder part of the device of Fig. 14;
Fig. 17 is an end view of the holder part mounted to the head piece of the dental floss device of Fig. 14;
Fig. 18 is a cross sectional view of the device of Fig. 17 along the line indicated in Fig. 17;
Fig. 19 is a side perspective view of the handle head piece part of the device of Fig. 14;
Fig. 20 is a side perspective view of the holder part of the device of Fig. 14;
Fig. 21 is an end perspective view of the handle head piece part of the device of Fig. 14; and
Fig 22 is a cross sectional view of the handle head piece of Fig. 21 along the line indicated in Fig. 21.

### Detailed Description

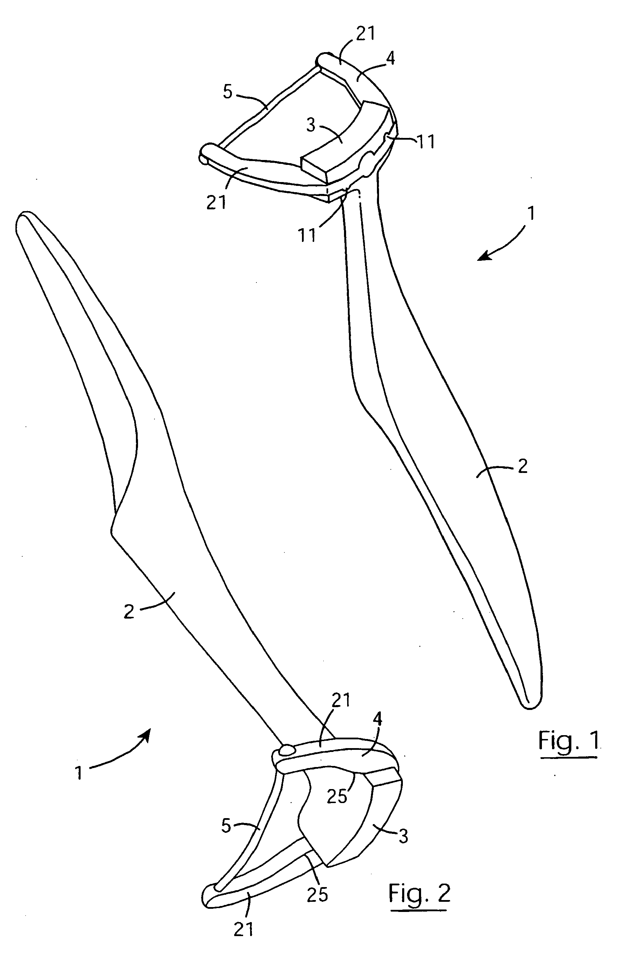

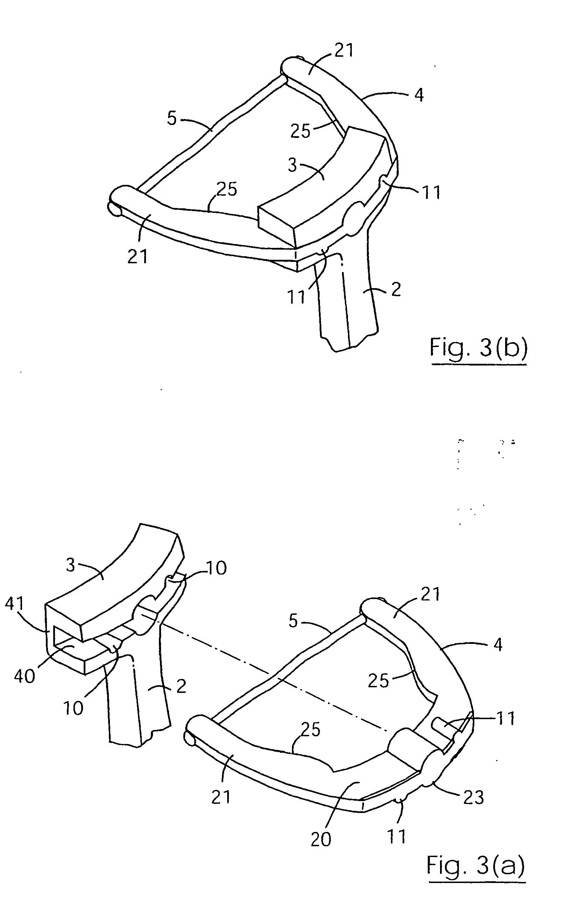

Referring to the drawings and initially to Figs. 1 to 7 thereof there is illustrated a dental floss device 1 according to the invention comprising a handle 2 having a head piece 3 and a disposable holder 4 for a length of dental floss 5. The device has an interlock which ensures that the holder 4 can be interengaged with the head piece 3 only when the holder 4 is correctly orientated and aligned with the head piece 3, as illustrated. The interlock comprises a head interlock part provided by interlock grooves 10 and a holder interlock part provided by corresponding interlock tongues 11. In this case, there are two interlock grooves 10 and corresponding interlock tongues 11 which slidably interengage when the holder 4 is correctly aligned with the head piece 3. If the holder 4 is turned so that it is not correctly aligned with the head piece 3, the interlock tongues 11 of the holder 4 prevent engagement of the holder 4 with the head piece 3. Thus there is no risk that a user will incorrectly align and engage the dental floss holder 4 with the head piece 3.

In more detail, the holder 4 comprises a base portion 20 which in this case is of arcuate shape in longitudinal cross section and a pair of spaced-apart jaws 21 extending from the base portion 20 to accommodate a length of floss 5 therebetween. The base portion 20 includes an enlarged central section 23 and interlock tongue 11 extends laterally of the base portion 20. In this case there are two interlock tongues 11 which extend from opposite sides of the base portion 20. The jaws 21 each have inwardly extending snap fit projections 25.

The correct alignment configuration of the holder is, as illustrated, when the jaws 21 of the holder extend to embrace the head piece therebetween. An incorrect alignment of the holder to the head piece would be if a user positioned the holder such that the jaws did not embrace the head piece but rather extended away from it.

The handle 2 is shaped and contoured for ease of holding and use by a user. The head piece 3 has a transversely extending engagement groove 40 which is of complementary arcuate shape to that of the base portion 20 of the holder 4. In effect, the base portion 20 of the holder 4 forms an engagement tongue which is releasably engaged, on assembly, in the engagement groove 40 of the head piece 3 of the handle 2.

The head piece 3 also has an end or floor section 41 over which the snap projections 25 of the holder 4 pass and behind which the snap projections 25 engage, an assembly. In this way the holder 4 is securely engaged with the head piece 3.

In use, the holder 4 is fitted to the head piece 3 by first inserting the head piece through the gap defined between the jaws 21 and floss length 5 of the holder 4. The base portion or engagement tongue 20 is then correctly aligned with the engagement groove 40 and the interlock tongues 11 and grooves 10 are also aligned. The holder 4 is then pressed using light pressure to snap fittingly engage the projections 25 behind the floor 41 of the head piece 3. To release the holder 4 from the head piece 3 finger pressure is used to reverse the procedure by first disengaging the snap projections 25 from behind the floor 41 of the head piece 3. The spent holder 4 can then be disposed of and replaced by a fresh holder 4.

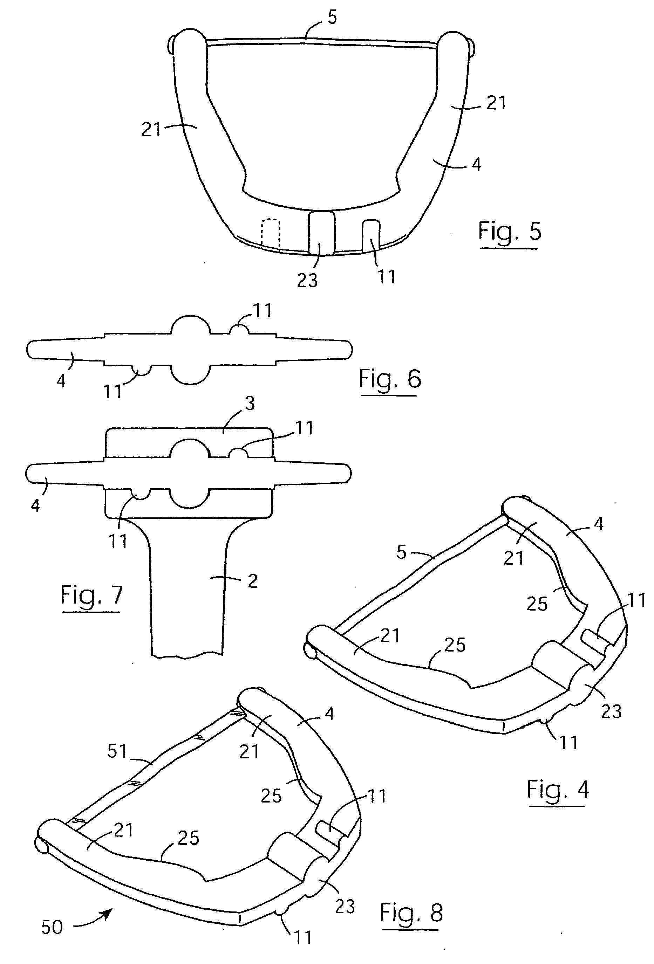

Referring to Fig. 8 there is illustrated an alternative holder 50 in which a length of floss tape 51 extending between the jaws 21.

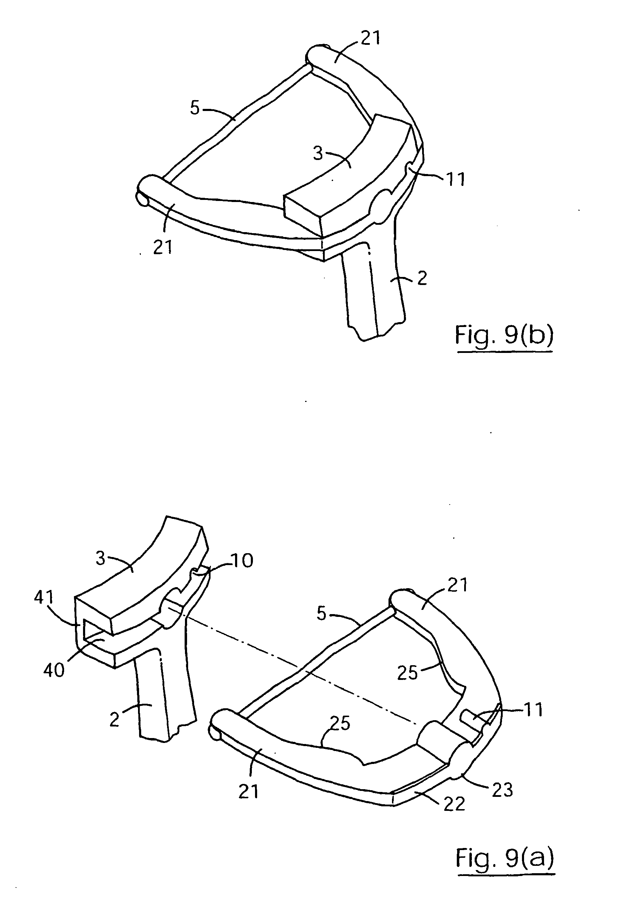

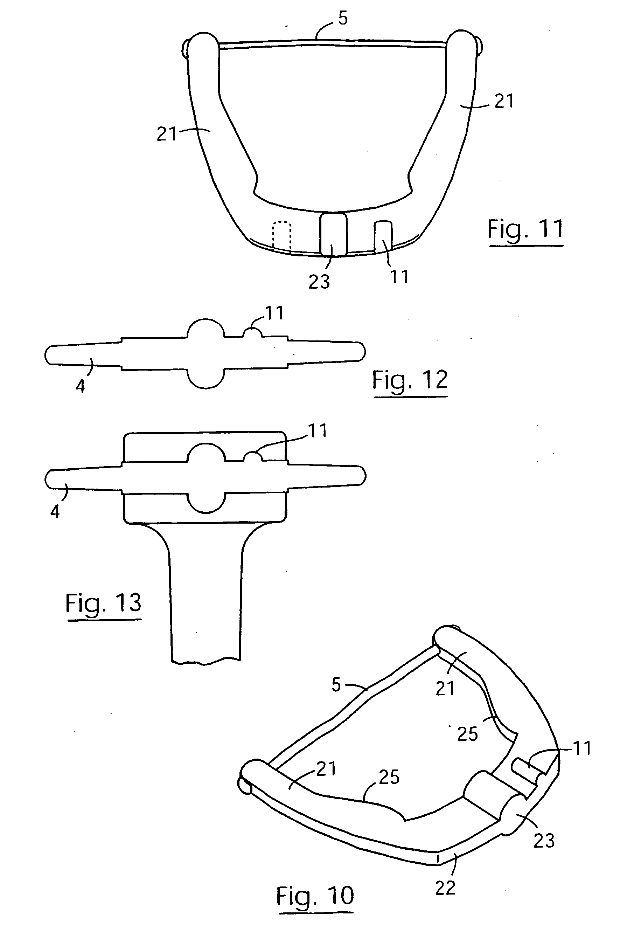

An alternative embodiment which is not part of the claimed invention is illustrated in Figs. 9 to 13 which is similar to that of Figs. 1 to 7 and like parts are assigned the same reference numerals.

In this case, there is only one interlock tongue 11 and interlock groove 10. There may also be two grooves 10 in the handle and one tongue 11 on the holder.

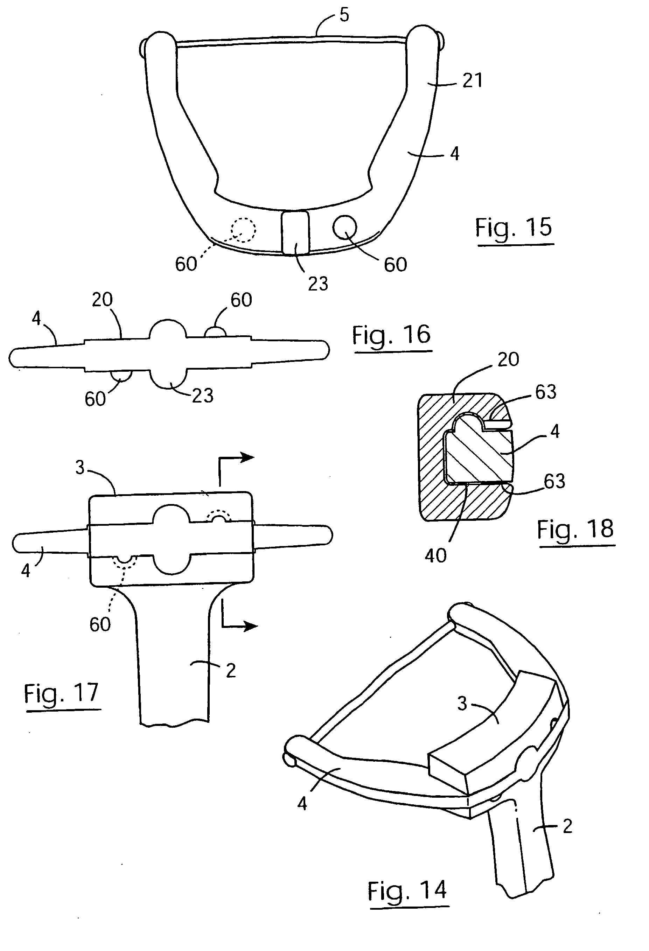

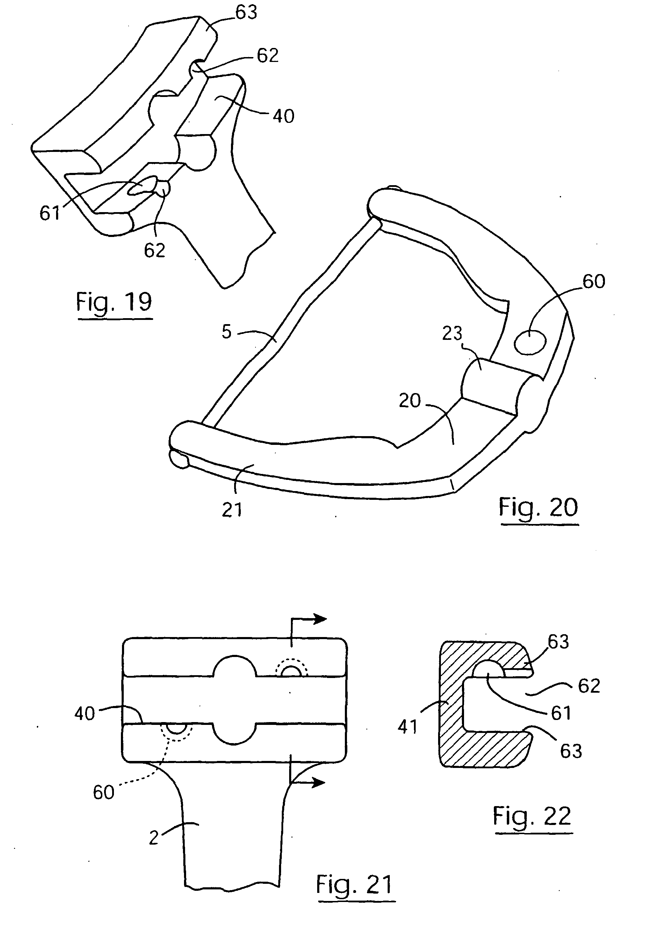

A further alternative embodiment of the invention is illustrated in Figs. 14 to 22 which is similar to that of Figs. 1 to 7 and like parts are assigned the same reference numerals.

In this case, there are two interlock receiving recesses 60 substantially hemi-spherical in shape in the engagement groove 40 of the holder 4. Corresponding substantially hemi-spherical projections 61 are located on the base portion 20 of the head piece 3. The head piece 3 may comprise only one corresponding projection 61.

The substantially hemi-spherical receiving recess 60 extends laterally to the edge 63 of the engagement groove 40. A laterally extending channel 62, extending from the receiving recess 60 to the edge 63 of the engagement groove 40, has a smaller radius than the radius of the receiving recess 60 as shown especially in Figs. 17 to 19 and 21 and 22.

On assembly of the head piece 3 with the holder 4, the outer edges 63 of the engagement groove 40 deform slightly to allow the base portion 20 of the holder 4 with the hemi-spherical projections 61 to slidably engage with the corresponding laterally extending channel 62 of the receiving recess 60. The hemi-spherical projections 61 on the head piece 3 have a radius corresponding to the receiving recesses 60. The holder 4 is securely engaged with the head piece 3 when the hemi-spherical projections 61 snap-fittingly engage securely with the corresponding receiving recess 60. Such an engagement system ensures that the holder 4 is correctly aligned with the head piece 3.

## Claims

1. A dental floss device (1) comprising:-
a handle (2) having a head piece (3); and
a dental floss holder (4) for interengagement with the head piece (3);
the dental floss holder (4) comprising a base portion (20) and a pair of spaced-apart jaws (21) extending from the base portion (20) to accommodate a length of dental floss (5) therebetween, the jaws (21) of the holder (4) extending to embrace the head piece (3) therebetween;
the device comprising an engagement groove (40) on the holder (4) or head piece (3) and a complementary engagement tongue (20) on the other of the holder (4) or head piece (3) which engages the engagement groove (40), on assembly of the holder (4) and head piece (3);
the device (1) comprising an interlock (10, 11, 60, 61) to substantially prevent inter-engagement of the engagement groove (40) and the engagement tongue (20) except when the holder (4) is in the correct alignment configuration with respect to the handle (2),
the interlock (10, 11, 60, 61) comprising a head interlock part (10, 61) on the head piece (3) and a holder interlock part (11, 60) on the dental floss holder (4),
the interlock parts comprising two interlock tongues (11, 60) which extend laterally from opposite sides of the engagement tongue (20) or groove (40); and
two interlock grooves (10, 61) to receive the interlock tongues (11,60),
the tongues (11, 60) being a push fit in the grooves (10, 61) only when the holder (4) is in the correct alignment configuration in which the jaws (21) of the holder (4) extend to embrace the head piece (3) therebetween.

2. A device as claimed in claim 1 wherein the interlock parts comprise two interlock tongues (11,60) which extend laterally from opposite sides of the tongue portion (20) of the holder (4) and two interlock grooves (10,61) in the engagement groove (40) of the headpiece.

3. A device as claimed in claim 2 wherein the base portion (20) includes an enlarged central section (23) intermediate the interlock tongues (11,60).

4. A device as claimed in any of claims I to 3 wherein the interlock tongue (11, 60) is of arcuate shape in cross section and the interlock groove (10, 61) is of complementary arcuate shape.

5. A device as claimed in any of claims 1 to 4 wherein the dental floss holder (I) comprises a releasable lock (25) for engagement on assembly with the head piece (3).

6. A device as claimed in claim 5 wherein the releasable lock comprises snap fit projections (25).

7. A device as claimed in claim 6 wherein the snap fit projections (25) are provided on the jaws (21) of the holder (4).

8. A device as claimed in any preceding claim wherein the dental floss is a length of dental floss string (5).

9. A device as claimed in any of claims 1 to 7 wherein the dental floss is a length of dental floss tape (5).

10. A dental floss holder (4) for a dental floss device as claimed in any of claims 1 to 9 for assembly to a head piece (3) of a handle (2), the dental floss holder (4) comprising a base portion (20) and a pair of spaced-apart jaws (21) extending from the base portion (20) to accommodate a length of dental floss (5) therebetween,
the holder comprising an engagement groove (40) for engagement with a complementary engagement tongue portion (20) of a head piece; or an engagement tongue portion (20) for engagement with a complementary engagement groove (40) of a head piece,
the jaws (21) of the holder (4) extending to embrace a head piece (3) of a handle (2) therebetween in a correct alignment configuration of the holder (4) with respect to a handle (2) in use,
the dental floss holder (4) having a holder interlock (11, 60) on the engagement groove (40) or engagement tongue (20), the interlock parts (10, 11, 60, 61) being adapted to substantially prevent inter-engagement of the engagement groove (40) and the engagement tongue (20) except when the holder (4) is in a correct alignment configuration,
the interlock (10, 11, 60,61) comprising a head interlock part (10, 61) on the head piece (3) and a holder interlock part (11, 60) on the dental floss holder (4), the interlock parts comprising two interlock tongues (11, 60) which extend laterally from opposite sides of the engagement tongue (20) or groove (40), or two interlock grooves (10, 61) to receive the interlock tongues (11, 60).

11. A dental floss holder (4) as claimed in claim 10 wherein the interlock tongues (11, 60) extend laterally from opposite sides of the engagement tongue (20) of the holder (4).

## Patentansprüche

1. Zahnseidevorrichtung (1), die Folgendes umfasst:
einen Griff (2) mit einem Kopfstück (3); und
einen Zahnseidehalter (4) zum Ineinandergreifen mit dem Kopfstück (3);
wobei der Zahnseidehalter (4) einen Basisteil (20) und ein Paar beabstandeter Backen (21) umfasst, die sich von dem Basisteil (20) erstrecken, um eine Länge von Zahnseide (5) zwischen denselben aufzunehmen, wobei sich die Backen des Halters (4) so erstrecken, dass sie das Kopfstück (3) zwischen sich umschließen;
wobei die Vorrichtung eine Eingriffsnut (40) an dem Halter (4) oder dem Kopfstück (3) und eine komplementäre Eingriffsfeder (20) an dem anderen des Halters (4) oder des Kopfstücks (3) umfasst, die in die Eingriffsnut (40) beim Zusammenbau des Halters (4) und des Kopfstücks (3) eingreift;
wobei die Vorrichtung (1) eine Verriegelung (10, 11, 60, 61) aufweist, um im Wesentlichen Ineinandergreifen der Eingriffsnut (40) und der Eingriffsfeder (20) zu verhindern, außer wenn sich der Halter (4) in korrekter Ausrichtungskonfiguration in Bezug zum Griff (2) befindet, und die Verriegelung (10, 11, 60, 61) einen Kopfverriegelungsteil (10, 61) an dem Kopfstück (3) und einen Halterverriegelungsteil (11, 60) an dem Zahnseidehalter (4) aufweist,
wobei die Verriegelungsteile zwei Verriegelungsfedern (11, 60) aufweisen, die sich lateral von gegenüberliegenden Seiten der Eingriffsfeder (20) oder Nut (40) erstrecken; und
zwei Verriegelungsnuten (10, 61) zum Aufnehmen der Verriegelungsfedern (11,60),
wobei die Federn (11, 60) nur einen Schiebesitz in den Nuten (10,61) aufweisen, wenn sich der Halter (4) in der richtigen Ausrichtungskonfiguration befindet, in der sich die Backen (21) des Halters (4) so erstrecken, dass sie das Kopfstück (3) zwischen sich umschließen.

2. Vorrichtung nach Anspruch 1, bei der die Verriegelungsteile zwei Vernegelungsfedern (11, 60), die sich lateral von gegenüberliegenden Seiten des Federteils (20) des Halters (4) erstrecken, und zwei Verriegelungsnuten (10,61) in der Eingriffsnut (40) des Kopfstücks aufweisen.

3. Vorrichtung nach Anspruch 2, bei der der Grundteil (20) einen vergrößerten mittigen Abschnitt (23) zwischen den Verriegelungsfedern (11, 60) umfasst.

4. Vorrichtung nach einem der Ansprüche 1 bis 3, bei der die Verriegelungsfeder (11, 60) im Querschnitt eine gebogene Form hat, und die Verriegelungsnut (10, 61) eine komplementär gebogene Form hat.

5. Vorrichtung nach einem der Ansprüche 1 bis 4, bei der der Zahnseidehalter (1) eine lösbare Verriegelung (25) zum Ineinandergreifen mit dem Kopfstück (3) beim Zusammenbau aufweist.

6. Vorrichtung nach Anspruch 5, bei der die lösbare Verriegelung Einrastvorsprünge (25) aufweist.

7. Vorrichtung nach Anspruch 6, bei der die Einrastvorsprünge (25) an den Backen (21) des Halters (4) vorgesehen sind.

8. Vorrichtung nach einem vorhergehenden Anspruch, bei der die Zahnseide eine Länge eines Zahnseidenfadens (5) darstellt.

9. Vorrichtung nach einem der Ansprüche 1 bis 7, bei der die Zahnseide eine Länge eines Zahnseidenbands (5) darstellt.

10. Zahnseidehalter (4) für eine Zahnseidevorrichtung nach einem der Ansprüche 1 bis 9 zum Einbau an einem Kopfstück (3) eines Griffs (2), wobei der Zahnseidehalter (4) einen Basisteil (20) und ein Paar beabstandeter Backen (21) aufweist, die sich von dem Basisteil (20) erstrecken, um eine Länge von Zahnseide (5) zwischen denselben aufzunehmen,
wobei der Halter eine Eingriffsnut (40) zum Ineinandergreifen mit einem komplementären Eingriffsfederteil (20) eines Kopfstücks; oder einen Eingriffsfederteil (20) zum Ineinandergreifen mit einer komplementären Eingriffsnut (40) eines Kopfstücks aufweist,
wobei sich die Backen (21) des Halters (4) so erstrecken, dass sie in Gebrauch ein Kopfstück (3) eines Griffs (2) zwischen denselben in einer korrekten Ausrichtungskonfiguration des Halters (4) in Bezug zu einem Griff (2) umschließen,
wobei der Zahnseidehalter (4) eine Halterverriegelung (11, 60) an der Eingriffsnut (40) oder Eingriffsfeder (20) aufweist, und die Verriegelungsteile (10, 11, 60, 61) angepasst sind, um im Wesentlichen Ineinandergreifen der Eingriffsnut (40) und der Eingriffsfeder (20) zu verhindern, außer wenn sich der Halter (4) in einer korrekten Ausrichtungskonfiguration befindet,
die Verriegelung (10, 11, 60, 61) einen Kopfverriegelungsteil (10, 61) an dem Kopfstück (3) und einen Halterverriegelungsteil (11, 60) an dem Zahnseidehalter (4) aufweist, und die Verriegelungsteile zwei Verriegelungsfedern (11, 60), die sich lateral von gegenüberliegenden Seiten der Eingriffsfeder (20) oder Nut (40) erstrecken, oder zwei Verriegelungsnuten (10, 61) zum Aufnehmen der Verriegelungsfedern (11, 60) aufweisen.

11. Zahnseidehalter (4) nach Anspruch 10, bei dem sich die Verriegelungsfedern (11, 60) lateral von gegenüberliegenden Seiten der Eingriffsfeder (20) des Halters (4) erstrecken.

## Revendications

1. Dispositif à fil dentaire (1) comprenant :
un manche (2) muni d'une pièce de tête (3) ; et
un porte-fil dentaire (4) s'enclenchant sur la pièce de tête (3) ;
le porte-fil dentaire (4) comprenant une partie de base (20) et une paire de mâchoires espacées (21) s'étendant depuis la partie de base (20) pour recevoir une longueur de fil dentaire (5) entre elles, les mâchoires (21) du porte-fil (4) s'étendant pour emboîter la pièce de tête (3) entre elles ;
le dispositif comprenant une rainure d'enclenchement (40) sur le porte-fil (4) ou la pièce de tête (3) et une languette d'enclenchement complémentaire (20) sur l'autre du porte-fil (4) ou de la pièce de tête (3) qui s'enclenche sur la rainure d'enclenchement (40) quand on assemble le porte-fil (4) et la pièce de tête (3) ;
le dispositif (1) comprenant un dispositif de blocage (10, 11, 60, 61) pour empêcher sensiblement l'enclenchement mutuel de la rainure d'enclenchement (40) et de la languette d'enclenchement (20) sauf quand le porte-fil (4) est en configuration d'alignement correct par rapport au manche (2),
le dispositif de blocage (10, 11, 60, 61) comprenant une partie de blocage de tête (10, 61) sur la pièce de tête (3) et une partie de blocage de porte-fil (11, 60) sur le porte-fil dentaire (4),
les parties de blocage comprenant deux languettes de blocage (11, 60) qui s'étendent latéralement depuis des côtés opposés de la languette d'enclenchement (20) ou de la rainure d'enclenchement (40) ; et
deux rainures de blocage (10, 61) pour recevoir les languettes de blocage (11, 60),
les languettes (11, 60) se montant par poussée dans les rainures (10, 61) uniquement lorsque le porte-fil (4) est en configuration d'alignement correct où les mâchoires (21) du porte-fil (4) s'étendent pour emboîter la pièce de tête (3) entre elles.

2. Dispositif conforme à la revendication 1, où les parties de blocage comprennent deux languettes de blocage (11, 60) qui s'étendent latéralement depuis des côtés opposés de la partie de type languette (20) du porte-fil (4) et deux rainures de blocage (10, 61) dans la rainure d'enclenchement (40) de la pièce de tête.

3. Dispositif conforme à la revendication 2, où la partie de base (20) comprend une section centrale agrandie (23) intermédiaire aux languettes de blocage (11, 60).

4. Dispositif conforme à une quelconque des revendications 1 à 3, où la languette de blocage (11, 60) est de forme arquée en coupe transversale et la rainure de blocage (10, 61) est de forme arquée complémentaire.

5. Dispositif conforme à une quelconque des revendications 1 à 4, où le porte-fil dentaire (1) comprend un dispositif de verrouillage libérable (25) pour s'enclencher, lors du montage, avec la pièce de tête (3).

6. Dispositif conforme à la revendication 5, où le dispositif de verrouillage libérable comprend des projections encliquetables (25).

7. Dispositif conforme à la revendication 6, où les projections encliquetables (25) sont prévues sur les mâchoires (21) du porte-fil (4).

8. Dispositif conforme à une quelconque des revendications précédentes, où le fil dentaire est une longueur de fil dentaire de type cordonnet (5).

9. Dispositif conforme à une quelconque des revendications 1 à 7, où le fil dentaire est une longueur de fil dentaire de type ruban (5).

10. Porte-fil dentaire (4) pour dispositif à fil dentaire conforme à une quelconque des revendications 1 à 9 pour montage sur une pièce de tête (3) d'un manche (2), le porte-fil dentaire (4) comprenant une partie de base (20) et une paire de mâchoires espacées (21) s'étendant depuis la partie de base (20) pour recevoir une longueur de fil dentaire (5) entre elles,
le porte-fil comprenant une rainure d'enclenchement (40) pour s'enclencher avec une partie de type languette d'enclenchement complémentaire (20) d'une pièce de tête ; ou une partie de type languette d'enclenchement (20 pour s'enclencher sur une rainure d'enclenchement complémentaire (40) d'une pièce de tête,
les mâchoires (21) du porte-fil (4) s'étendant pour emboîter une pièce de tête (3) d'un manche (2) entre elles dans une configuration d'alignement correct du porte-fil (4) par rapport à un manche (2) à l'emploi,
le porte-fil dentaire (4) étant doté d'un dispositif de blocage de porte-fil (11, 60) sur la rainure d'enclenchement (40) ou la languette d'enclenchement (20), les parties de blocage (10, 11, 60, 61) étant aptes à empêcher sensiblement l'enclenchement mutuel de la rainure d'enclenchement (40) et la languette d'enclenchement (20) sauf quand le porte-fil (4) est en configuration d'alignement correct,
le dispositif de blocage (10, 11, 60, 61) comprenant une partie de blocage de tête (10, 61) sur la pièce de tête (3) et une partie de blocage de porte-fil (11, 60) sur le porte-fil dentaire (4), les parties de blocage comprenant deux languettes de blocage (11, 60) qui s'étendent latéralement depuis des côtés opposés de la languette d'enclenchement (20) ou de la rainure (40), ou deux rainures de blocage (10, 61) pour recevoir les languettes de blocage (11, 60).

11. Porte-fil dentaire (4) conforme à la revendication 10 où les languettes de blocage (11, 60) s'étendent latéralement depuis des côtés opposés de la languette d'enclenchement (20) du porte-fil (4).
